Europäisches Patentamt

European Patent Office

Office européen des brevets

(19)

(11) Veröffentlichungsnummer: **0 034 803**
**B1**

(12) ## EUROPÄISCHE PATENTSCHRIFT

(45) Veröffentlichungstag der Patentschrift:
**27.07.83**

(51) Int. Cl.³: **B 60 T 17/08**

(21) Anmeldenummer: **81101160.0**

(22) Anmeldetag: **19.02.81**

(54) **Federspeicherbremszylinder.**

(30) Priorität: **26.02.80 DE 3007166**

(43) Veröffentlichungstag der Anmeldung:
**02.09.81 Patentblatt 81/35**

(45) Bekanntmachung des Hinweises auf die Patenterteilung:
**27.07.83 Patentblatt 83/30**

(84) Benannte Vertragsstaaten:
**BE CH DE FR GB LI SE**

(56) Entgegenhaltungen:
**DE-A-2 608 502**
**DE-B-2 646 158**
**DE-B-2 748 540**
**GB-A-2 003 233**

(73) Patentinhaber: **Knorr-Bremse GmbH, Moosacher Strasse 80, D-8000 München 40 (DE)**

(72) Erfinder: **Persson, Erling, Konsertvägen 7, S-24500 Staffanstorp (SE)**
Erfinder: **Furtner, Walter, Brianconstrasse 4, D-8200 Rosenheim (DE)**
Erfinder: **Kerscher, Albert, Frühlingstrasse 39, D-8057 Eching (DE)**

EP 0 034 803 B1

Federspeicherbremszylinder

Die Erfindung bezieht sich auf einen Federspeicherbremszylinder gemäß dem Oberbegriff des Anspruches 1.

Durch die DE-A-2 608 502 ist bereits ein Federspeicherbremszylinder der eingangs genannten Art bekanntgeworden, bei dem die Lösevorrichtung aus einem im Zylinder geführten Tauchkolben besteht, der zum Eingriff zwischen Flanken am Umfang eines Sperrgliedes durch eine Feder beaufschlagt ist, wodurch das Sperrglied in seiner einen Drehrichtung gesperrt jedoch durch die Gestaltung der Zähne in der entgegengesetzten Drehrichtung auch bei eingerastetem Tauchkolben drehbar ist.

Beim eingebremsten Fahrzeug wirkt auf die Kolbenstange eine erhebliche Kraft in Löserichtung, die auf das drehbare Teil des Gewindespindeltriebes ein Drehmoment ausübt, das mit dem Sperrglied drehbar gekuppelt ist, welches durch Einrasten des Tauchkolbens in seiner Sperrstellung am Zylinder abgefangen wird. Beim eingebremsten Fahrzeug kann ohne Beaufschlagung des Spannkolbens mit Druckluft die Bremse gelöst werden, in dem der Tauchkolben aus seiner Verriegelung herausgezogen wird. Das über die in der Bremsstellung verspannte Kolbenstange auf das drehbare Teil des Gewindespindeltriebes wirkende Drehmoment wird durch Lösen des Tauchkolbens freigegeben, so daß sich das drehbare Teil des Gewindespindeltriebes drehen kann, wobei die Kolbenstange entspannt und damit die Bremse gelöst wird.

Wird anschließend die Sperrfeder durch Beaufschlagung des Spannkolbens mit Druckluft wieder gespannt, wodurch der Federspeicherbremszylinder erneut bremsbereit wird, so dreht sich das drehbare Teil des Gewindespindeltriebes und mit ihm das Sperrglied in der durch den Tauchkolben nicht gesperrten Drehrichtung. Dabei besteht aber die Möglichkeit, daß bei gespannter Spannfeder der Tauchkolben zwischen zwei benachbarten Zahnfalken des Sperrgliedes sich auf einem Zahn abstützt. Wird in einer solchen Situation durch rasche Entlüftung des Bremszylinders zum Einbremsen der Bremse die Federkraft schlagartig frei, so wird auf das drehbare Teil des Gewindespindeltriebes ebenso schlagartig ein hohes Drehmoment ausgeübt. Da aber der Tauchkolben sich nicht in einer Sperrstellung zwischen zwei Zahnflanken des Sperrgliedes befindet, ist dieses und damit das drehbare Teil des Gewindespindeltriebes in Kraftrichtung der Feder nicht gegen Drehung gesperrt. Es beginnt sich daher entsprechend dem hohen Drehmoment mit hoher Geschwindigkeit zu drehen, so daß der Tauchkolben keine Gelegenheit findet, zwischen zwei benachbarte Zahnflanken einzurasten. Vielmehr springt Zahn für Zahn des Sperrgliedes unter den Tauchkolben, ohne daß dieser zwischen zwei Zähne einrasten kann, mit dem Ergebnis, daß keine Bremsung ausgelöst wird.

Bekannte Lösevorrichtungen mit Tauchkolbenprinzip können daher mit einer gewissen Unsicherheit behaftet sein, so daß nach einem Lösevorgang ein völliges Versagen der Bremse nicht auszuschließen ist.

Ein weiterer Nachteil der bekannten Sperrkupplung mit Hilfe eines Tauchkolbens besteht darin, daß die Zähne des Sperrgliedes hohem Verschleiß ausgesetzt sein können und zwar besonders dann, wenn der Tauchkolben sich nach einem Spannen der Spannfeder aufgrund eines vorangegangenen Lösevorganges in einer nicht eingerasteten Stellung auf einem Zahn befindet und beim Einleiten eines Bremsvorganges in eine Raststellung zwischen zwei Zähne zu gelangen sucht, oder wenn der Tauchkolben bei einem Lösevorgang zu kurzzeitig aus seiner Sperrstellung herausgezogen und zum erneuten Einrasten bereits wieder freigegeben wird, bevor die Kolbenstange restlos entspannt und damit die Bremse voll gelöst ist, das drehbare Teil des Gewindespindeltriebes sich also noch dreht.

Aufgabe der Erfindung ist es daher, einen Federspeicherbremszylinder der eingangs genannten Art mit einer Sperrkupplung anzugeben, bei der ein Bremsversagen nach einem Lösevorgang wegen nicht gegen Drehung gesperrtem Gewindespindeltrieb sicher vermieden werden kann und die beim Stand der Technik aufgezeigten Verschleißprobleme an dem Sperrglied nicht auftreten können.

Die Aufgabe wird erfindungsgemäß mit dem Kennzeichen des Anspruches 1 gelöst.

Vorteilhafte Ausführungen ergeben sich aus den Merkmalen der Unteransprüche.

In der Zeichnung sind Ausführungsbeispiele schematisch dargestellt. Hierin zeigt

Fig. 1 einen Federspeicherbremszylinder in einer ersten Ausführung und

Fig. 2 einen Federspeicherbremszylinder in einer zweiten Ausführung.

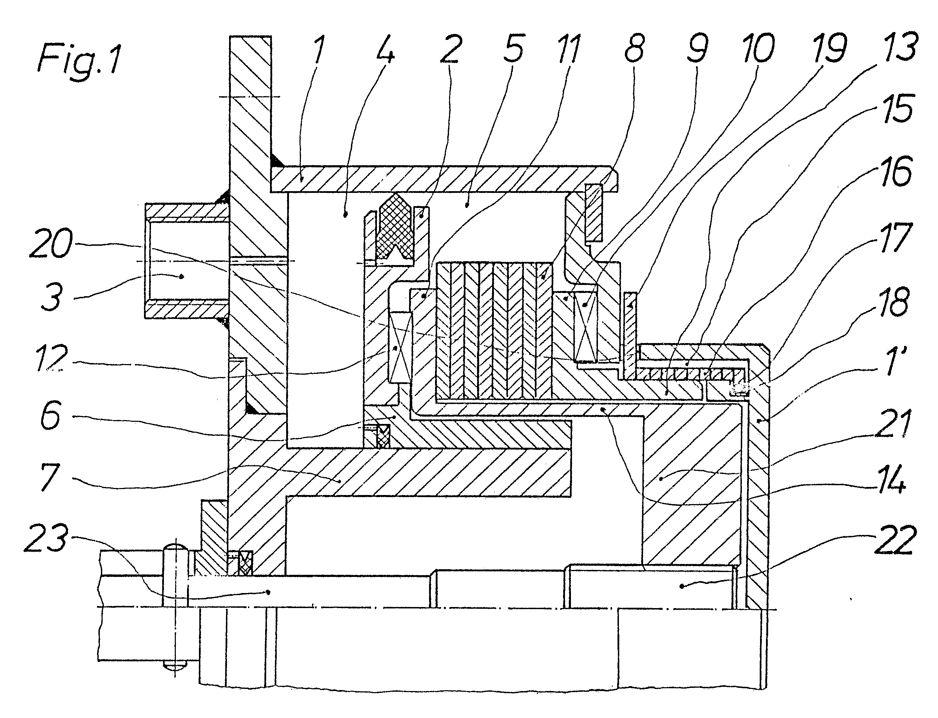

Der in Fig. 1 in seiner Lösestellung gezeigte Federspeicherbremszylinder weist ein zylindrisches Gehäuse 1 auf, in welchem ein Spannkolben 2 abgedichtet axial verschieblich geführt ist. Das Gehäuse 1 ist mit einem Rohranschluß 3 versehen, durch welchen ein vom Spannkolben begrenzter Beaufschlagungsraum 4 mit einem Druckmittel füllbar ist. Der als Ringkolben 2 ausgebildete Spannkolben ist mit einer Hülse 6 versehen, die längs einer zylindrischen Innenwand 7 abgedichtet geführt ist.

Auf der dem Beaufschlagungsraum abgewandten Seite des Spannkolbens 2 ist eine Kammer 5 vorhanden, in der die Speicherfeder 8 untergebracht ist. Die Speicherfeder drückt mit ihrem einen, axial unverschieblichen Ende gegen einen ersten Federteller 9, der sich über ein axiales Lager 10 am Zylinderdeckel 1' abstützt. Die Speicherfeder drückt mit ihrem axial verschieblichen Ende gegen einen zweiten Federteller 11, der sich an der vom beaufschlagten Raum 4 abgewandten Seite des Kolbens 2 über ein Axiallager 12 abstützt.

An den ersten Federteller 9 greift eine erste zylindrische Hülse 13 und an den anderen Federteller 11 greift eine zweite zylindrische Hülse 14 an. In dem Zylinderdeckel 1' liegt in einer Nut 15 eine Friktionsfeder 16. Das eine Ende 17 der Feder 16 greift drehfest hinter einen Vorsprung 18 im Zylinderdeckel 1'. Das andere Ende 10 der Feder 16 ragt in einen Spalt 20 des Zylinderdeckels 1'. Die zylindrische Hülse 13 besitzt einen Außendurchmesser, der etwas größer ist als der Innendurchmesser der entspannten Feder 16, die mit mehreren Windungen auf der zylindrischen Hülse 13 aufliegt.

Die zylindrische Hülse 14 ist mit einer Mutter 21 verbunden, deren Gewinde in das Gewinde einer Gewindespindel 22 eingreift, die an einer Kolbenstange 23 fest ist. Das Gewinde des Gewindespindeltriebes 21, 22 ist nicht selbsthemmend. Die Kolbenstange 23 mit der Gewindespindel 22 ist im Zylinder drehfest und axial verschieblich gelagert. Zwischen der Mutter 21 und der Hülse 14 braucht wegen der Freilauffunktion der Friktionsfeder 16 keine Anschlagkupplung vorgesehen sein, wie sie zum Beispiel durch DE-A-2 608 502 (Fig. 5) bekannt ist und wie sie dort notwendig ist, weil durch die eingerastete Lösevorrichtung das mit dem Gewindespindeltrieb gekuppelte Sperrglied in beiden Drehrichtungen gesperrt ist.

Zwischen der Mutter 21 und der Hülse 14 ist lediglich dann eine Anschlagkupplung vorzusehen, wenn der Federspeicherbremszylinder einen Eilanlegehubkolben aufweist, wie er zum Beispiel durch die GB-A-1 007 437 und die US-A-3 255 676 bekannt und in der EP-A-0 031 057 beschrieben ist.

Der Federspeicherbremszylinder nach Fig. 1 arbeitet wie folgt:

Der Bremszylinder ist in der Lösestellung dargestellt, in der die Kammer 4 mit Druckluft beaufschlagt ist. Zum Anlegen der Bremse wird die Kammer 4 entlüftet. Die Speicherfeder 8 beginnt sich auszudehnen und drückt den Federspeicher-Spannkolben 2 nach links. Die Drehung des Federtellers 9 mit der angeschlossenen Hülse 13 vom Beschauer weg in die Zeichnungsebene hinein ist durch die Friktionsfeder 16 gesperrt, da das eine Federende 17 an einem Anschlag 18 im Zylinderdeckel 1' festliegt und die Friktionsfeder 16 von dem Federende 17 aus aus der Zeichnungsebene auf den Beschauer zu bis zu ihrem anderen Ende 19 gewickelt ist, wobei mehrere Windungen der Friktionsfeder auf der äußeren Zylinderfläche der Hülse 13 unter geringer Vorspannung aufliegen.

Durch die drehfeste Halterung des Federtellers 9 ist auch der Federteller 11 mit der angeschlossenen Hülse 14 und der Mutter 21 drehfest gehalten, so daß bei der Bewegung des Spannkolbens 2 in seine Bremsstellung nach links die Mutter 21 sich nicht um die Spindel 22 zu drehen vermag. Da die Spindel 22 an der Kolbenstange 23 drehfest ist und die Kolbenstange 23 ihrerseits nur axial verschieblich ist, wird die Kolbenstange über die mit der Spindel 22 drehfest gekuppelte Mutter 21 in Bremsrichtung nach links bewegt, um die Bremse zur Anlage zu bringen.

Zum normalen Lösen der Bremse wird die Kammer 4 des Zylinders über den Anschluß 3 wieder belüftet. Die Friktionsfeder 16 sperrt weiterhin eine Drehbewegung des Federtellers 9 vom Beschauer aus in die Zeichnungsebene hinein. Die Mutter 21 bleibt daher mit der an der Kolbenstange 23 festen Spindel 22 drehfest gekuppelt. Dadurch wird bei der Bewegung des Spannkolbens 2 in seine Lösestellung nach rechts auch die Kolbenstange 23 in ihre Lösestellung nach rechts bewegt.

Befindet sich der Spannkolben 2 in seiner nach links vorgefahrenen Bremsstellung und soll eine Notlösung vorgenommen werden, dann wird das über die eingebremste Kolbenstange, die Spindel 22, die Mutter 21, die Hülse 14 mit dem Federteller 11 und die Speicherfeder 8 auf den Federteller 9 und die Hülse 13 abgegebene, vom Beschauer in die Zeichnungsebene hineinwirkende Drehmoment freigegeben, wenn das Federende 19 der Friktionsfeder aus der Zeichnungsebene auf den Beschauer zu angezogen wird. Hierbei wird die Friktionsfeder 16 etwas aufgeweitet, so daß der Reibungsschluß zwischen der Friktionsfeder und der Außenfläche der Hülse 13 freigegeben wird. Die zwischen den Axiallagern 10 und 12 gelagerte Speicherfeder und mit ihr die Mutter 21 des Gewindespindeltriebes vermag sich jetzt um die Gewindespindel 22 vom Beschauer weg zur Zeichnungsebene hin zu drehen, bis die Bremsspannung aus der Kolbenstange freigegeben ist und die Bremse notgelöst ist.

Soll anschließend der Federspeicher-Bremszylinder in seine bremsbereite Lösestellung gebracht werden, in der der Spannkolben 2 in seine in Fig. 1 dargestellte Lösestellung durch Beaufschlagung der Kammer 4 mittels Druckluft zurückbewegt ist, kann jetzt die Speicherfeder 8 mit der Mutter 21 in entgegengesetzter Drehrichtung aus der Zeichnungsebene auf den Beschauer zu drehen, da die Friktionsfeder 16 aufgrund ihrer Freilauffunktion eine auf den Beschauer zu laufende Drehbewegung freigibt. Bedingt durch die Vorspannung, mit der die Friktionsfeder 16 die Hülse 13 übergreift, ist dabei eine gewisse Gleitreibung zwischen der Hülse 13 und der Friktionsfeder 16 zu überwinden.

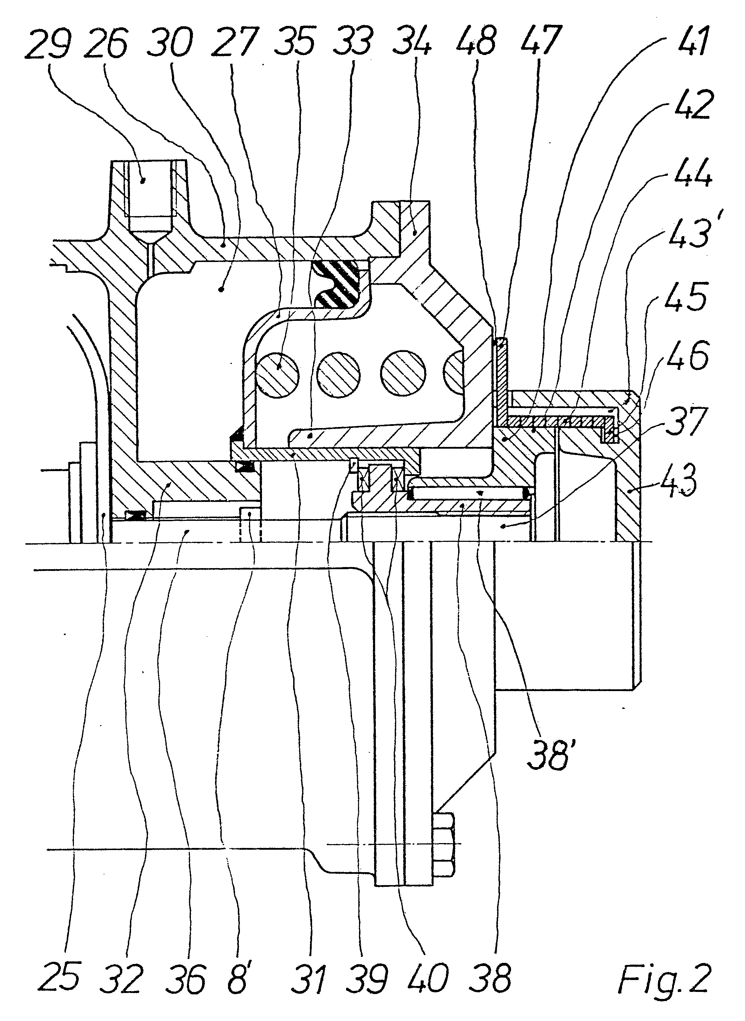

Fig. 2 zeigt eine weitere Ausbildung eines erfindungsgemäßen Federspeicherbremszylinders, der mit einer Betriebsbremsbetätigungseinrichtung eine Einheit bildet, von der der Kolben 25 in Fig. 2 nur angedeutet ist. In dem Zylindergehäuse 26 ist der Speicherfeder-Spannkolben 27 axial bewegbar angeordnet. Am Kolben 27 ist eine Hülse 31 befestigt und axial zwischen einer Zylinderwand 32 am Boden des Zylinders 26 und einem Rohr 33 am Zylinderdekkel 34 geführt. Der Kolben 27 ist von einer Speicherfeder 35 beaufschlagt, die sich am Zylinderdeckel 34 abstützt. Eine Kolbenstange 36 ist durch die Zylinderwand 32 axial verschieblich geführt. Sie wirkt mit dem Betriebsbremskolben 25 zusammen. Eine mit einem nicht selbsthemmenden Gewinde versehene Gewindespindel 37 ist mit der Kolbenstange 36 fest verbunden. Eine Mutter 38 ist im Eingriff mit dem Gewinde der Spindel 37. Die Mutter 38 ist gegenüber der Hülse 31 über Lager 39, 40 drehbar gelagert. Ein ringförmiges Sperrglied 41, das die Mutter 38 umfaßt, ist mit Stiften 38' drehfest mit der Mutter gekuppelt. Die Stifte liegen in axialen Ausnehmungen in dem Sperrglied 41 und der Mutter 38, wodurch eine axiale Verschiebung zwischen der Mutter 38 und dem Sperrglied möglich ist, eine relative Verdrehung zwischen diesen beiden Teilen aber verhindert ist. Das Sperrglied 41 ist im Zylinder axial unverschieblich aber drehbar angeordnet und besitzt eine zylindrische Außenfläche 42. In einem Schlitz 43' des Gehäuseteiles 43 ragt eine Friktionsfeder 44, die mit ihrem einen Ende 45 an einem Gehäuseanschlag 46 drehfest gehalten ist. Das andere Ende 47 der Feder ragt in einen Gehäuseschlitz 48. Die Feder greift mit mehreren Windungen unter Vorspannung über die zylindrische Außenfläche 42 des Sperrgliedes 41, entsprechend wie die Feder 16 in Fig. 1 über die zylindrische Außenfläche der Hülse 13 greift, die mit dem Sperrglied 41 in Fig. 2 vergleichbar ist. Die Verhältnisse im Zusammenhang mit den Friktionsfedern in den Fig. 1 und 2 entsprechen sich einander, so daß auf die Funktionsbeschreibung der Fig. 1 Bezug genommen wird.

Die Ausführung nach Fig. 2 arbeitet wie folgt:

Der Federspeicherbremszylinder ist in Fig. 2 in seiner Lösestellung dargestellt, in der in der Kammer 30 Druckluft eingespeist ist, die den Spannkolben entgegen der Kraft der Feder 35 in seiner Lösestellung hält. Wird zum Bremsen die Kammer 30 entlüftet, bewegt sich der Spannkolben unter der Kraft der Speicherfeder 35 nach links. Da die Mutter über das Sperrglied 41 mittels der Friktionsfeder an einer Drehbewegung vom Beschauer weg in die Zeichnungsebene hinein gehindert ist, wird die Kolbenstange über die mit der Spindel drehfeste Mutter in Bremsrichtung nach links verschoben. Bei normalem Lösevorgang durch Belüftung der Kammer 30 ist das Sperrglied 41 weiterhin durch die Friktionsfeder gesperrt, so daß die Kolbenstange in die Lösestellung zurückgeführt wird.

Befindet sich der Federspeicherbremszylinder in seiner Bremsstellung und ist eine Notlösung der Bremse erforderlich, so wird an dem Federende 47 aus der Zeichnungsebene zum Beschauer hin gezogen, wodurch die Speicherfeder das Sperrglied freigibt. Das über die Kolbenstange und die Spindel auf die Mutter wirkende Drehmoment führt dazu, daß die Mutter sich mit dem Sperrglied um die Spindel dreht, wobei die Mutter sich relativ zu dem Sperrglied axial verschiebt, bis die auf die Kolbenstange wirkende Bremsspannung abgebaut ist. Soll anschließend der Federspeicherbremszylinder in seine normale Lösestellung gebracht werden, aus der unter Entlüftung der Kammer 30 die Bremse angelegt wird, dann ist die Rückführung des Spannkolbens 27 aus seiner Bremsstellung in die Lösestellung entsprechend wie bei dem Ausführungsbeispiel nach Fig. 1 möglich, weil die Friktionsfeder 44 dank ihrer Freilauffunktion eine Drehbewegung des Sperrgliedes 41 und damit auch der Mutter 38 um die Spindel 37 in entgegengesetzter Drehrichtung aus der Zeichnungsebene heraus auf den Beschauer zu erlaubt.

## Patentansprüche

1. Federspeicherbremszylinder, insbesondere für Schienenfahrzeuge, mit mechanischer Lösevorrichtung, einer einseitig axial unverschieblich abgestützten Speicherfeder (8; 35), einem Speicherfeder-Spannkolben (2; 27), einem zwischen dem Speicherfeder-Spannkolben und einer Kolbenstange (23; 36) angeordneten, von der Speicherfeder belastbaren, nicht selbsthemmenden Gewindespindeltrieb (21, 22; 37, 38), bestehend aus einem wenigstens bei der Kraftübertragung der Speicherfeder im Zylinder drehfesten (22; 37) und einem drehbar gelagerten Teil (21; 37) und einer als entsperrbarer Freilauf (16 bis 19; 41 bis 47) ausgebildeten, willkürlich schaltbaren Sperrkupplung (16; 44) zum Festbremsen des drehbar gelagerten Teiles, dadurch gekennzeichnet, daß die Sperrkupplung eine Friktionsfeder (16; 44) ist, daß ein im Zylinder drehbares Sperrglied (13; 41) mit einer zylindrischen Sperrfläche vorhanden ist, deren Außendurchmesser etwas größer ist als der Innendurchmesser der entsperrten Friktionsfeder (16; 44), daß die Friktionsfeder die Sperrfläche mit mehreren Windungen übergreift, so daß die eine Drehrichtung des Sperrgliedes durch die Friktionsfeder gesperrt ist, daß das Sperrglied mit dem drehbaren Teil (21; 37) des Gewindespindeltriebes drehfest gekuppelt ist, daß das eine Ende der Friktionsfeder (17; 45) im Zylinder festliegt und das andere Ende der Friktionsfeder (19; 47) in eine Ausnehmung im Zylinder ragt und daß durch die Ausnehmung an das Federende ein Betätigungselement zum Aufheben der Sperrwirkung der Friktionsfeder gegenüber dem Sperrglied greift.

2. Federspeicherbremszylinder nach Anspruch 1, dadurch gekennzeichnet, daß das Sperrglied (16) mit einem axial unverschieblichen Federteller (9) am axial unverschieblichen Ende der Speicherfeder (8) fest ist.

3. Federspeicherbremszylinder nach Anspruch 2, dadurch gekennzeichnet, daß der axial unverschiebliche Federteller (9) über ein Axiallager (10) an einer inneren Zylinderwand abgestützt ist.

4. Federspeicherbremszylinder nach Anspruch 2 und 3, dadurch gekennzeichnet, daß der axial verschiebliche Federteller (11) am axial verschieblichen Ende der Speicherfeder über ein Axiallager (12) am Spannkolben (2) abgestützt ist und daß der axial verschiebliche Federteller (11) über eine Hülse (14) mit dem drehbaren Teil (21) des Gewindespindeltriebes fest verbunden oder kuppelbar ist.

5. Federspeicherbremszylinder nach Anspruch 1, dadurch gekennzeichnet, daß das Sperrglied (41) mit der Mutter (38) des Gewindespindeltriebes drehfest und relativ axial verschieblich gekuppelt ist und daß die Mutter (38) relativ zu einer am Spannkolben (27) befindlichen Kolbenhülse (31) drehbar gelagert ist.

6. Federspeicherbremszylinder nach Anspruch 1, dadurch gekennzeichnet, daß das Sperrglied mit der Gewindespindel des Gewindespindeltriebes drehfest und relativ axial verschieblich gekuppelt ist und daß die Mutter des Gewindespindeltriebes an einer Kolbenhülse (31) am Spannkolben fest ist.

7. Federspeicherbremszylinder nach einem der Ansprüche 1 bis 6, dadurch gekennzeichnet, daß zwischen dem drehbaren Teil des Gewindespindeltriebes und dem Sperrglied eine Anschlagkupplung vorgesehen ist.

## Claims

1. Spring brake cylinder, in particular for rolling stock, having a mechanical release device, a pre-loaded spring (8; 35) supported at one end so as to be axially undisplaceable, a loaded-spring bracing plunger (2; 27), a non-self-locking threaded spindle drive (21, 22; 37, 38) arranged between the loaded-spring bracing plunger and a plunger rod (23; 36) and loadable by the pre-loaded spring, consisting of one part (22; 37) which is unrotatable at least when force is transferred by the loaded spring in the cylinder, and one rotatably mounted part (21; 37), and an arbitrarily operable blocking coupling (16; 44) designed as an unblockable freewheel (16 to 19; 41 to 47) for bringing the rotatably mounted part into a standstill state, characterised in that the blocking coupling is a friction spring (16; 44), in that a blocking member (13; 41) with a cylindrical blocking surface is provided, which is rotatable in the cylinder, and whose external diameter is somewhat larger than the inner diameter of the unblocked friction spring (16; 44), in that several coils of the friction spring overlap the blocking surface, so that one direction of rotation of the blocking member is blocked by the friction spring in that the blocking member is unrotatably coupled to the rotatable part (21; 37) of the threaded spindle drive, in that one end of the friction spring (17; 45) is fixed in the cylinder and the other end of the friction spring (19; 47) projects into a recess in the cylinder, and in that an actuating element for lifting the blocking effect of the friction spring relative to the blocking member reaches through the recess on to the end of the spring.

2. Spring brake cylinder according to claim 1, characterised in that the blocking member (16) is fixed to an axially undisplaceable spring plate (9) on the axially undisplaceable end of the pre-loaded spring (8).

3. Spring brake cylinder according to claim 2, characterised in that the axially undisplaceable spring plate (9) is supported by means of an axial bearing (10) on an inner wall of the cylinder.

4. Spring brake cylinder according to claims 2 and 3, characterised in that the axially displaceable spring plate (11) on the axially displaceable end of the pre-loaded spring is supported by means of an axial bearing (12) on the bracing plunger (2) and in that the axially displaceable spring plate is rigidly connected or is couplable by means of a sleeve (14) to the rotatable part (21) of the threaded spindle drive (11).

5. Spring brake cylinder according to claim 1, characterised in that the blocking member (41) is unrotatably coupled to the nut (38) of the threaded spindle drive in such a manner as to be axially displaceable relative thereto, and in that the nut (38) is mounted to be rotatable relative to a plunger sleeve (31) located on the bracing plunger (27).

6. Spring brake cylinder according to claim 1, characterised in that the blocking member is unrotatably coupled to the threaded spindle of the threaded spindle drive so as to be axially displaceable relative thereto, and in that the nut of the threaded spindle drive is fixed to a plunger sleeve (31) on the bracing plunger.

7. Spring brake cylinder according to one of the claims 1 to 6, characterised in that an abutment coupling is provided between the rotatable part of the threaded spindle drive and the blocking member.

## Revendications

1. Cylindre de frein à ressort accumulateur, en particulier pour des véhicules sur rails, avec un dispositif mécanique de desserrage, un ressort accumulateur (8, 35) à appui axial unilatéral et non déplaçable, un piston d'armement de ressort (2; 27), une transmission à broche filetée (21, 22; 37, 38) non auto-bloquante, disposée entre le piston d'armement du ressort et une tige de piston (23; 36), susceptible d'être chargée par le ressort accumulateur et constituée par un élément (22, 37) monté dans le cylindre sans pouvoir y tourner au moins lors de la transmission de la force du ressort accumulateur et par un élément (21; 37) monté à rotation dans le cylindre, et avec un accouplement de verrouillage (16; 44) commutable à volonté et réalisé sous la forme d'un dispositif à roue libre déverrouillable (16 à 19; 41 à 47), pour immobiliser par freinage l'élément monté à rotation, caractérisé par le fait que l'accouplement de verrouillage est un ressort à friction (16, 44), qu'il est prévu un organe de verrouillage (13, 41) monté à rotation dans le cylindre et pourvu d'une surface cylindrique de verrouillage dont le diamètre extérieur est quelque peu supérieur au diamètre intérieur du ressort à friction (16, 44) déverrouillé, que le ressort de friction s'étend avec plusieurs spires sur la surface de verrouillage, en sorte que l'un des sens de rotation de l'organe de verrouillage est bloqué par le ressort à friction, que l'organe de verrouillage est accouplé à rotation avec l'élément tournant (21, 37) de la transmission à broche filetée, que l'une des extrémités du ressort à friction (17; 45) est fixée dans le cylindre et l'autre extrémité du ressort de friction (19; 47) pénètre dans une ouverture ménagée dans le cylindre et qu'à travers l'ouverture l'extrémité du ressort est attaquée par un organe de commande pour supprimer l'effet de verrouillage du ressort de friction par rapport à l'organe de verrouillage.

2. Cylindre de frein à ressort accumulateur selon la revendication 1, caractérisé par le fait que l'organe de verrouillage (16) est solidaire d'une cuvette de ressort (9) non déplaçable axialement, au niveau de l'extrémité non déplaçable axialement du ressort accumulateur (8).

3. Cylindre de frein à ressort accumulateur selon la revendication 2, caractérisé par le fait que la cuvette de ressort (9), non déplaçable axialement, prend appui, par l'intermédiaire d'un palier de butée (10), sur une paroi cylindrique intérieure.

4. Cylindre de frein à ressort accumulateur selon la revendication 2 et 3, caractérisé par le fait que la cuvette de ressort (11) prend appui à l'extrémité axialement déplaçable du ressort accumulateur, par l'intermédiaire d'un palier de butée (12), sur le piston d'armement (2) et que la cuvette de ressort (11), déplaçable axialement, est solidaire de ou est susceptible d'être accouplée à l'élément tournant (21) de la transmission à broche filetée, par l'intermédiaire d'une douille (14).

5. Cylindre de frein à ressort accumulateur selon la revendication 1, caractérisé par le fait que l'organe de verrouillage (41) est accouplé à l'écrou (38) de la transmission à broche filetée de façon à en être solidaire en rotation et à être relativement déplaçable axialement, et que l'écrou (38) est monté de façon à pouvoir tourner par rapport à une douille de piston (31) prévue sur le piston d'armement (27).

6. Cylindre de frein à ressort accumulateur selon la revendication 1, caractérisé par le fait que l'organe de verrouillage est solidaire en rotation de et relativement déplaçable par rapport à la broche filetée de la transmission à broche filetée, et que l'écrou de la transmission à broche filetée est solidaire d'une douille de piston (31) portée par le piston d'armement.

7. Cylindre de frein à ressort accumulateur selon l'une des revendications 1 à 6, caractérisé par le fait qu'entre l'élément tournant de la transmission à broche filetée et l'organe de verrouillage est prévu un accouplement à butée.

Fig.1

Fig. 2